Europäisches Patentamt

European Patent Office

Office européen des brevets

(11) Veröffentlichungsnummer: **0 414 027 A1**

# (12) EUROPÄISCHE PATENTANMELDUNG

(21) Anmeldenummer: 90115062.3

(22) Anmeldetag: 06.08.90

(51) Int. Cl.5: **G01C 21/16, G01S 5/02**

(30) Priorität: 21.08.89 DE 3927514

(43) Veröffentlichungstag der Anmeldung:
27.02.91 Patentblatt 91/09

(84) Benannte Vertragsstaaten:
AT BE CH DE DK ES FR GB GR IT LI LU NL SE

(71) Anmelder: Standard Elektrik Lorenz
Aktiengesellschaft
Lorenzstrasse 10
D-7000 Stuttgart 40(DE)

(72) Erfinder: Beier, Wolfgang
Alte Renninger Strasse 123
D-7252 Weil der Stadt(DE)
Erfinder: Evers, Harry-H.
Römerhofstrasse 13
D-7257 Ditzingen(DE)
Erfinder: Kasties, Günther
Rosensteinstrasse 7
D-7257 Ditzingen(DE)

(74) Vertreter: Pohl, Heribert, Dipl.-Ing et al
Standard Elektrik Lorenz AG Patent- und
Lizenzwesen Postfach 30 09 29
D-7000 Stuttgart 30(DE)

(54) **Verfahren und Vorrichtung zur Headingberechnung.**

(57) Zur genauen Headingberechnung bei Fahrzeugen bedarf es nordsuchender Kreisel, die sehr kostspielig sind. Die Kombination von Beschleunigungssensoren, die fest mit dem Fahrzeug verbunden sind und Beschleunigungsgrößen, die mit Hilfe eines Funk-Navigations-Empfängers bestimmt werden, ermöglicht eine einfache und kostengünstige Headingberechnung. Ein aus einem Kreiselsystem und der Kombination aus Beschleunigungssensoren und Funk-Navigations-Empfänger bestehendes Navigationssystem stellt eine preiswerte und hochgenaue Möglichkeit zur Headingbestimmung und zur kontinuierlichen Stützung der Ausrichtung von Inertialsystemen dar.

FIG.1

## VERFAHREN UND VORRICHTUNG ZUR HEADINGBERECHNUNG

Die Erfindung betrifft ein Verfahren und eine Vorrichtung zur Headingberechnung von Land-, Wasseroder Luftfahrzeugen, insbesondere jedoch von Flugzeugen mit Hilfe von Funk-Navigationsanlagen.

Die Bestimmung der Position eines Fahrzeuges während der Fahrt hängt entscheidend davon ab, mit welcher Genauigkeit eine Anfangsausrichtung, auch Heading genannt, vor Beginn der Fahrt bestimmt wurde. Für überseeflüge werden zu diesem Zweck Trägheitsnavigationssysteme verwendet. Mit Hilfe dieser Trägheitsnavigationssysteme wird vor dem Start der Heading, das ist die räumliche Lage der Flugzeugmittelachse bezogen auf ein mit der Erde verbundenes Koordinatensystem, bestimmt. Im folgenden wird dieses Koordinatensystem ENU-System genannt (East-North-Up). Zur Nordausrichtung muß das Flugzeug mehrere Minuten lang völlig erschütterungsfrei stehen.

Hinreichend präzise Trägheitsnavigationssysteme sind, da sie aus hochempfindlichen mechanischen Einzelteilen bestehen, sehr teurer. Preiswerte Trägheitssysteme sind jedoch nicht genau genug. Schon ein Fehler von 0,5° in der Heading Bestimmung wirkt sich bei einer Flugdauer von mehreren Stunden, da die Position durch zweifache Integration aus der Beschleunigung gewonnen wird, verheerend aus.

Aufgabe der Erfindung ist es, ein Verfahren und eine Vorrichtung anzugeben, mit deren Hilfe sich eine Nordausrichtung auch ohne die Benutzung teurer Trägheitsnavigationssysteme mit ausreichender Genauigkeit durchführen läßt.

Gelöst wird diese Aufgabe durch ein Verfahren mit der Merkmalskombination des ersten Verfahrensanspruchs und durch eine Vorrichtung mit der Merkmalskombination des ersten Vorrichtungs anspruches.

Die Vorteile des erfindungsgemäßen Verfahrens und der erfindungsgemäßen Vorrichtung liegen darin, daß zur Nordausrichtung (Headingberechnung) die Meßwerte zweier preiswerter Meßinstrumente miteinander verknüpft werden. Bei dem einen Meßinstrument handelt es sich um Beschleunigungssensoren, die preiswert zu erhalten sind, bei dem anderen um einen Funk-Navigation-Empfänger, dessen Preis inzwischen ebenfalls erschwinglich ist.

Die abhängigen Ansprüche enthalten Merkmale, die die Erfindung weiter ausgestalten.

Ein Ausführungsbeispiel der Erfindung wird im folgenden anhand der Figuren 1 bis 3 beschrieben. Es zeigen:

Fig. 1 eine schematische Darstellung des flugzeugfesten Koordinatensystems,

Fig. 2a Zusammenhang zwischen zwei Koordinatensystemen

Fig. 2b Erläuterung des ENU (East-North-Up)-Koordinatensystems und

Fig. 3 ein Blockschaltbild mit den zur Headingberechnung notwendigen Elementen.

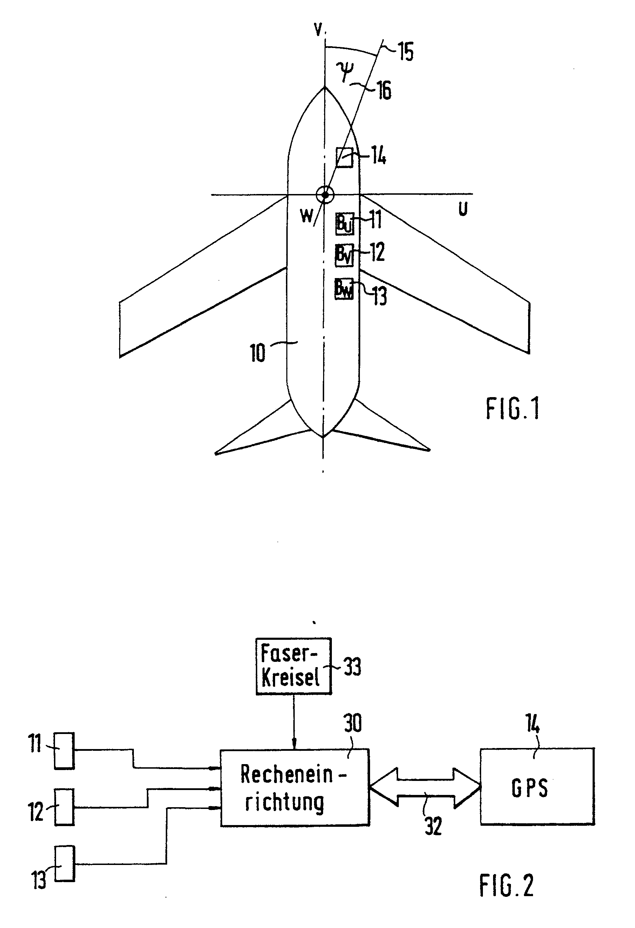

In Fig. 1 ist mit 10 schematisch ein Flugzeug dargestellt, in das ein mit u, v und w bezeichnetes Koordinatensystem eingezeichnet ist. Die Koordinate v liegt genau in der Flugzeugmittenachse, die Korrrdinate u steht senkrecht auf v und liegt in der Zeichenebene, die Koordinate w zeigt aus der Zeichenebene heraus. Im Flugzeug selbst befinden sich drei Beschleunigungssensoren 11, 12 und 13. Die Beschleunigungssensoren messen die Beschleunigung des Flugzeuges in Richtung der Koordinatenachse u, v und w. Mit 14 ist ein Funk-Navigations-Empfänger gekennzeichent, der die Position, die Geschwindigkeit und die Beschleunigung des Flugzeuges 10 in ENU-Koordinaten ausgibt.

Mit 15 ist eine der Koordinaten des ENU-Koordinatensystems bezeichnet. Das Koordinatensystem u, v, w sei gegenüber diesem Koordinatensystem um einen mit 16 bezeichneten Winkel Ψ verdreht.

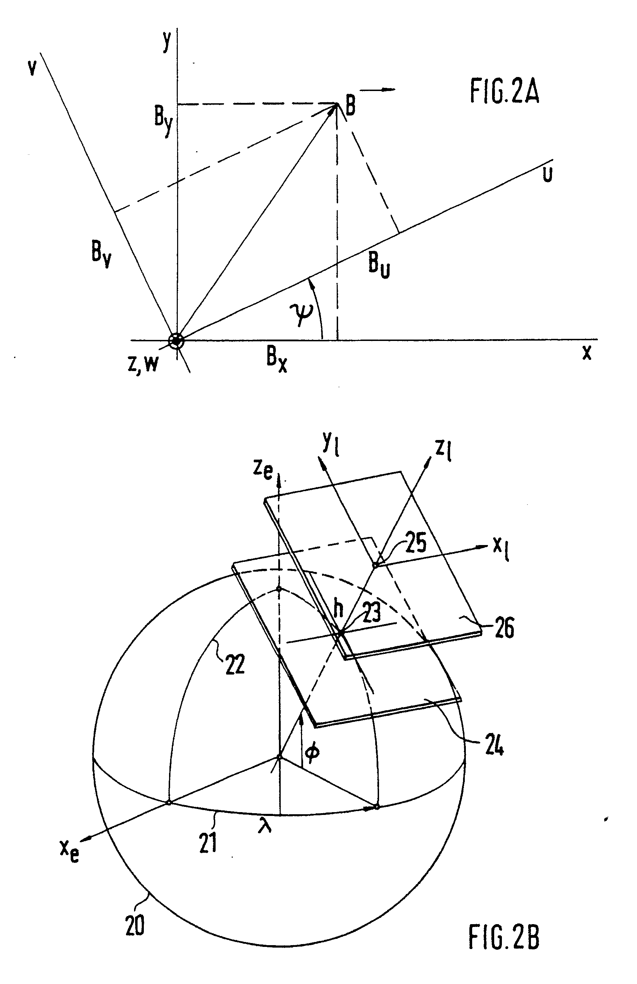

Fig. 2a stellt den Zusammenhang zwischen beiden Koordinatensystemen her. Ein mit den Beschleunigungssensoren 11, 12 und 13 gemessener Beschleunigungsvektor B hat im mit dem Flugzeug verbundenen Koordinatensystem u, v, w die Koordinaten $B_u$ und $B_v$. Der Einfachheit halber werde angenommen, daß die Komponente Bw des Beschleunigungsvektors gleich null sei. In ENU Koordinaten hat derselbe Beschleunigungsvektor B die Koordinaten $B_x$, $B_y$ und die z-Koordinate $B_z$ = 0. Von der einen Darstellung des Beschleunigungsvektors B zur anderen gelangt man durch die im folgenden wiedergegebene Transformationsmatrix:

$$\begin{pmatrix} B_x \\ B_y \\ B_z \end{pmatrix} = \begin{pmatrix} \cos \psi & -\sin \psi & 0 \\ \sin \psi & \cos \psi & 0 \\ 0 & 0 & 1 \end{pmatrix} \begin{pmatrix} B_u \\ B_v \\ B_w \end{pmatrix} .$$

Mit Hilfe einiger elementarer Umformungen wird der Winkel $\Psi$ aus den bekannten Daten ausgerechnet. So folgt aus der Matrixdarstellung:

$B_x = B_u \cos \Psi - B_v \sin \Psi$     (1)

$B_y = B_u \sin \Psi + B_v \cos \Psi$     (2)

Aus den beiden Gleichungen (1) und (2) folgt:

$$\psi = \arcsin \left[ \frac{B_u B_y - B_x \cdot B_v}{B_u^2 + B_u^2} \right]$$

Bei der Headingberechnung wird daher wie folgt vorgegangen:

Das Land-, Luft- oder Wasserfahrzeug wird für eine kurze Zeit beschleunigt. Mit Hilfe der Beschleunigungssensoren 11 , 12 und 13 wird der Beschleunigungsvektor in einem mit dem Fahrzeug fest verbundenen Koordinatensystem gemessen. Laut Fig. 2a sind das die Koordinaten u, v und w. Gleichzeitig wird mit Hilfe des Funk-Navigations-Empfängers 14, beispielsweise durch Auswertung der durch den Dopplereffekt hervorgerufenen Frequenzverschiebung derselbe Beschleunigungsvektor in ENU-Koordinaten gemessen. Da der Beschleunigungsvektor in beiden Fallen derselbe sein muß, wird der Heading mit Hilfe der oben genannten elementaren Umformungen errechnet.

Da die Beschleunigungsmesser neben der Änderung der Bewegung auch die Gravitation messen, wird der durch den Funk-Navigations-Empfänger bestimmte Beschleunigungsvektor vor dem Gleichsetzen durch die bekannte Erdbeschleunigung ergänzt.

Das beschriebene Verfahren ist auch dann anwendbar, wenn die ersten beiden Elemente der dritten Zeile der Transformationsmatrix und die ersten beiden Elemente der dritten Spalte der Transformationsmatrix ungleich null sind. Es sind dann mehrere Winkel anstelle eines einzigen Winkels zu berechnen.

Fig. 2b dient der Erläuterung der ENU-Koordinaten (East-North-Up). Dargestellt ist ein Referenzellipsoid 20 mit einem Äquator 21 und einem Nullmeridian 22, im Fall der Erde der Greenwich Meridian. Ein Punkt 23 auf dem Ellipsoid wird bestimmt durch die Koordinaten $\lambda$, $\phi$ und z. Im Punkt 23 berührt eine Tangentialebene 24 das Ellipsoid 20. Die ENU-Koordinaten eines Flugzeuges, das sich im Punkt 25 über dem Ellipsoid befindet, findet man wie folgt:

- $z_l$-Up liegt auf dem Radius durch den Punkt 23, steht also senkrecht auf der Tangentialebene 24.

- $y_l$-North liegt in einer zur Tangentialebene parallelen Ebene und zeigt in Nordrichtung.

- $x_l$ liegt ebenfalls in der zur Tangentialebene 2, parallelen Ebene 26 und steht auf $y_l$ und $z_l$ senkrecht.

Die Umrechnung der Koordinaten $\lambda$, $\phi$ bei festem Radius in die Koordinaten $x_l$, $y_l$ und $z_l$ ist elementare Mathematik und beispielsweise in Formelsammlungen wie Bronstein-Semendjajew "Taschenbuch der Mathematik" oder Karl Rottmann "Mathematische Formelsammlung" beschrieben.

Fig. 3 zeigt ein Navigationssystem, welches das erfindungsgemäße Verfahren zur Headingbestimmung benutzt. Mit 30 ist eine Recheneinrichtung bezeichnet, der die Signale der Beschleunigungssensoren 11, 12 und 13 zugeführt werden. über einen Datenbus 32 werden der Recheneinrichtung die Beschleunigungssignale des Funk-Navigations-Empfängers 14 zugeführt. Ebenfalls mit der Recheneinrichtung verbunden ist der Ausgang eines Faserkreisels 33. Die dargestellte Einrichtung arbeitet wie folgt:

Vor oder bei Antritt einer Fahrt wird das Land-, Luft- oder Wasserfahrzeug kurz beschleunigt. Mit Hilfe der Sensoren 11, 12 und 13 wird der auf die Fahrzeugkoordinaten bezogene Beschleunigungsvektor gemessen. Mit Hilfe des Funk-Navigations-Empfängers 14 wird derselbe Beschleunigungsvektor gemessen und im ENU-System angegeben. Die Recheneinrichtung 30 enthält einen Algorithmus, der die Bestimmung des Headings aus den gemessenen Werten ermöglicht.

Bei jeder Beschleunigung bzw. Richtungsänderung während des Fluges wird dieser Vorgang wiederholt.

Wenn es sich bei dem Fahrzeug um ein Flugzeug auf einem Langstreckenflug handelt, kann die Einrichtung nach Fig. 3 auch dazu benutzt werden, die mit Hilfe des Inertialsystems errechnete Position zu stützen, d.h. hin und wieder einen exakten Anfangswert zu erzeugen. Fig. 3 stellt somit ein Navigationssystem dar, das keine nordsuchenden Kreisel verwendet. Eine solche Billiglösung ist geeignet für den Einsatz in Hubschraubern oder beispielsweise in Drohnen.

**Ansprüche**

1. Verfahren zur Headingberechnung eines Land-, Wasser- oder Luftfahrzeuges, **gekennzeichnet durch** die Verknüpfung von Daten eines Funk-Navigations-Empfängers mit den Meßdaten von in dem Land-, Wasser- oder Luftfahrzeug angebrachten Sensoren.

2. Verfahren nach Anspruch 1, dadurch gekennzeichnet, daß aus den Daten des Funk-Navigations-Empfängers ein erster Beschleunigungsvektor in ENU (East-North-UP)-Koordinaten berechnet wird.

3. Verfahren nach Anspruch 1, dadurch gekennzeichnet, daß es sich bei den in dem Land-, Wasser- oder Luftfahrzeug angebrachten Sensoren um mit dem Fahrzeug starr verbundene Beschleunigungssensoren handelt.

4. Verfahren nach Anspruch 3, dadurch gekennzeichnet, daß aus den Meßdaten der Beschleunigungssensoren ein zweiter Beschleunigungsvektor, bezogen auf ein mit dem Fahrzeug fest verbundenes Koordinatensystem, berechnet wird.

5. Verfahren nach den Ansprüchen 2 und 4, dadurch gekennzeichnet, daß der Heading durch Koordinatentransformation aus dem ersten und dem zweiten Beschleunigungsvektor bestimmt wird.

6. Verfahren nach den Ansprüchen 1 bis 5, gekennzeichnet durch seine Verwendung zur Stützung der Navigation mittels Kreisel.

7. Vorrichtung zur Headingberechnung eines Land-, Wasser- oder Luftfahrzeuges, gekennzeichnet durch eine Recheneinrichtung, die die Ausgangssignale von Beschleunigungssensoren und eines Funk-Navigations-Empfängers verarbeitet.

8. Vorrichtung nach Anspruch 7, dadurch gekennzeichnet, daß die Beschleunigungssensoren fest mit dem Land-, Wasser- oder Luftfahrzeug verbunden sind.

9. Vorrichtung nach Anspruch 7, dadurch gekennzeichnet, daß der Funk-Navigations-Empfänger Beschleunigungsdaten in erdfesten ENU-Koordinaten abgibt.

FIG.1

FIG.2

FIG.2A

FIG.2B

Europäisches
Patentamt

Nummer der Anmeldung

# EUROPÄISCHER
# RECHERCHENBERICHT

## EP 90 11 5062

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 263 894 (LITEF)<br>* Insgesamt *<br>— — — | 1-9 | G 01 C 21/16<br>G 01 S 5/02 |
| X | US-A-4 754 280 (BROWN et al.)<br>* Zusammenfassung; Figuren 3,4; Anspruch 1 *<br>— — — | 1 | |
| X | IEEE 1985 NATIONAL AEROSPACE AND ELECTRONICS CONFERENCE, NAECON 1985, 20. - 24. Mai 1985, Band 2, Seiten 1198-1205; J.T. NIELSON et al.: "GPS aided inertial navigation"<br>* Seite 1199, rechte Spalte, Zeile 12 - Seite 1200, rechte Spalte, Zeile 16 *<br>— — — — — | 1 | |

| RECHERCHIERTE SACHGEBIETE (Int. Cl.5) |
|---|
| G 01 C<br>G 01 S |

Der vorliegende Recherchenbericht wurde für alle Patentansprüche erstellt

| Recherchenort | Abschlußdatum der Recherche | Prüfer |
|---|---|---|
| Den Haag | 20 November 90 | KOLBE W.H. |